**Europäisches Patentamt**

**European Patent Office**

**Office européen des brevets**

(19)

(11) Veröffentlichungsnummer : **0 158 870**
**B1**

(12)

# EUROPÄISCHE PATENTSCHRIFT

(45) Veröffentlichungstag der Patentschrift :
04.05.88

(21) Anmeldenummer : 85103456.1

(22) Anmeldetag : 23.03.85

(51) Int. Cl.⁴ : **A 46 B 13/02, A 46 B 15/00**

(54) **Zahnbürste.**

(30) Priorität : 18.04.84 DE 3414623

(43) Veröffentlichungstag der Anmeldung :
23.10.85 Patentblatt 85/43

(45) Bekanntmachung des Hinweises auf die Patenterteilung : 04.05.88 Patentblatt 88/18

(84) Benannte Vertragsstaaten :
**AT BE CH DE FR GB IT LI LU NL SE**

(56) Entgegenhaltungen :
**EP-A- 0 127 465**
**DE-C- 3 117 160**
**US-A- 4 253 212**

(73) Patentinhaber : **Blendax-Werke R. Schneider GmbH &
Co.**
**Rheinallee 88**
**D-6500 Mainz (DE)**

(72) Erfinder : **Mierau, Hans-Dieter, Prof. Dr.**
**Friedrich-Ebert-Ring 37**
**D-8700 Würzburg (DE)**
Erfinder : **Spindler, Thomas, Dipl.-Phys.**
**Ludwigstrasse 1**
**D-8700 Würzburg (DE)**

EP 0 158 870 B1

## Beschreibung

Die vorliegende Erfindung betrifft eine elektrisch angetriebene Zahnbürste, die es dem Benutzer gestattet, den richtigen Anpreßdruck der Bürste bei der Reinigung des Gebisses zu ermitteln und einzuhalten.

Ein wesentliches Kriterium für die optimale Funktion einer Zahnbürste, insbesondere einer Elektrozahnbürste, ist die Einhaltung eines richtigen Anpressdrucks beim Gebrauch. Ist der Anpressdruck zu niedrig, so tritt keine ausreichende Reinigung ein. Ist hingegen der Druck zu hoch, wird das Zahnfleisch gereizt, was zu Zahnfleischblutungen und, unter Umständen, auf längere Dauer sogar zur Rückbildung des Zahnfleisches und Freilegung der Zahnhälse führen kann. Es ist daher eine wesentliche Voraussetzung für die Nützlichkeit des Zähneputzens, insbesondere bei Anwendung einer elektrischen Zahnbürste, daß mit dem richtigen Anpressdruck geputzt wird.

Die vorliegende Erfindung geht daher von der Aufgabenstellung aus, eine elektrisch angetriebene Zahnbürste zu schaffen, die es dem Benutzer gestattet, den geeigneten Anpressdruck beim Betrieb der Bürste einzustellen und während des Zähneputzens aufrecht zu erhalten.

Die Lösung dieser Aufgabe besteht darin, eine Zahnbürste mit elektrischem Antrieb an sich bekannter Konstruktion mit einer Vorrichtung zur optischen oder akustischen Anzeige des optimalen Anpressdrucks während des Zähneputzens zu versehen.

Dies wird technisch dadurch realisiert, daß, vorzugsweise am zur Aufnahme des Bürstenschaftes vorgesehenen Achsenlager, ein Druckaufnehmer angebracht ist, der den an der Aufsteckbürste wirksamen Anpreßdruck aufnimmt und der mit einem Mikroprozessor verbunden ist, in dem ein individueller Soll-Druckwert des Benutzers gespeichert ist, der mit dem an der Bürste wirksamen Ist-Druckwert verglichen wird, wobei der Mikroprozessor mit einem Signalgeber so gekoppelt ist, daß beim Über- oder Unterschreiten des eingespeicherten Soll-Anpressdruckwertes ein wahrnehmbares Signal ausgelöst wird.

Aus der DE-PS 3 117 160 ist bereits eine Elektrozahnbürste bekannt, die dem Benutzer eine Kontrolle der Zahnputzzeit gestatten soll. Dies geschieht dadurch, daß diese Zahnbürste mit einem die Zahnputzdauer überwachenden Zeitgeber, der bei Handhabung der Zahnbürste in Betrieb gesetzt wird, und einem Anzeigeelement ausgestattet ist, wobei der Zeitgeber, von einer Belastungsmesseinrichtung gesteuert, nur in derjenigen Betriebszeit laufen soll, in der eine vorgegebene Belastung auf das Borstenteil ausgeübt wird, und nach Ablauf einer voreingestellten Mindestbetriebszeit der Zeitgeber ein Signal erzeugt.

Mit der Aufgabenstellung der vorliegenden Erfindung, die Einhaltung des optimalen Anpressdrucks während der Benutzung der Zahnbürste zu gestatten und deren Lösung, Abweichungen nach unten und oben von einem individuell gespeicherten Soll-Druckwert des Benutzers mittels eines Signalgebers anzuzeigen, hat diese bekannte Zahnbürste also nicht gemeinsam.

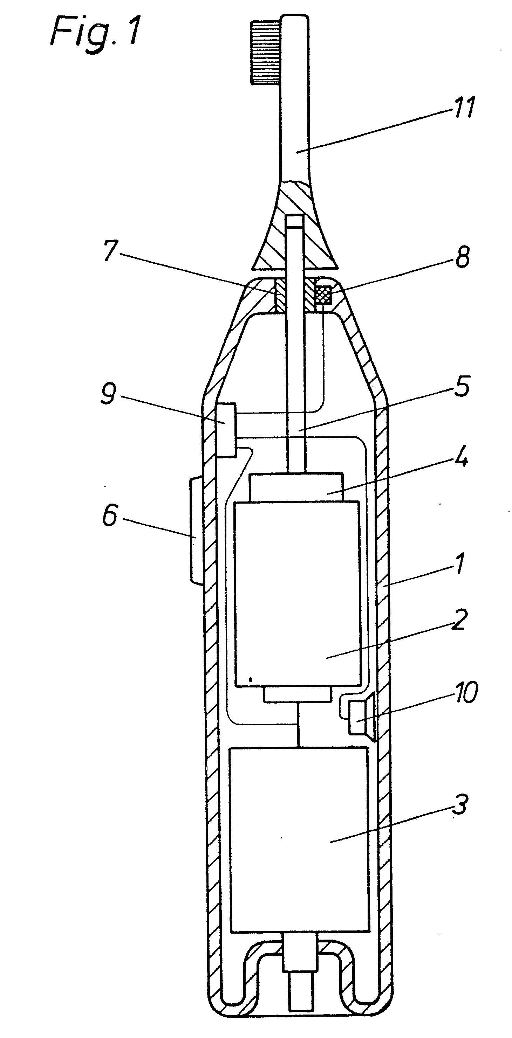

In Figur 1 wird eine erfindungsgemäß gestaltete elektrische Zahnbürste dargestellt:

In einem Gehäuse (1) sind Elektromotor (2), Akkumulator oder Batterie (3), ein Getriebe (4) zur Umwandlung der Drehbewegung des Motors in eine Schwingbewegung der Aufsteckachse (5) und Aufsteckbürste (11), ein Schalter (6) und das Achsenlager (7) untergebracht.

Ein Druckaufnehmer (8) am Lager (7) nimmt den an der Aufsteckbürste (11) wirkenden Anpressdruck auf und gibt ihn an einen Mikroprozessor (9) weiter.

In dem Mikroprozessor (9) ist ein Soll-Druckwert gespeichert, der mit dem an der Bürste wirksamen, eingehenden Ist-Druckwert verglichen wird. Wenn beide Werte identisch sind, erfolgt keine Reaktion.

Ist der Abpressdruck an der Aufsteckbürste (11) jedoch höher oder niedriger als der eingespeicherte Sollwert, wird vom Mikroprozessor (9) ein optisches oder akustisches, vom Benutzer wahrnehmbares Signal über einen Signalgeber (10) ausgelöst, das den Benutzer veranlaßt, den Druck der Zahnbürste auf die Zähne so zu verändern, bis das Signal erlischt.

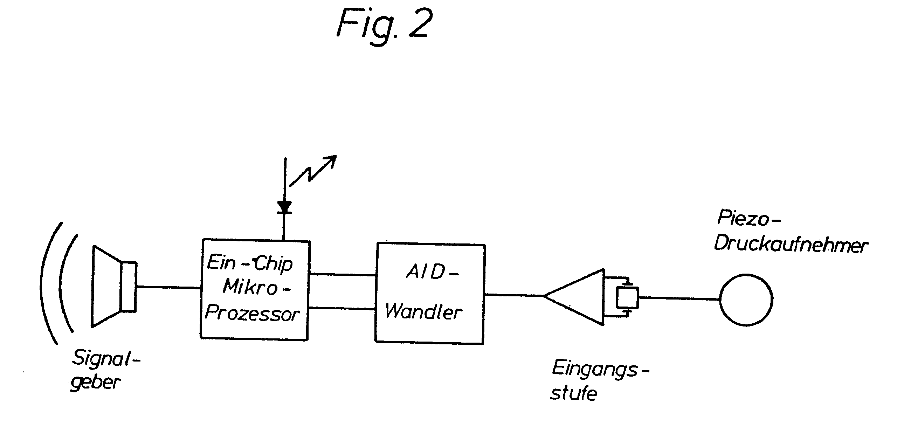

Figur 2 zeigt den schematischen Aufbau des oben beschriebenen Regelkreises.

## Patentansprüche

1. Elektrisch angetriebene Zahnbürste, die einen Druckaufnehmer (8) aufweist, der den wirksamen Anpreßdruck aufnimmt und der mit einem Mikroprozessor (9) verbunden ist, in dem der optimale Soll-Druckwert des Benutzers gespeichert ist, der mit dem an der Bürste während des Zahneputzens wirksamen Ist-Druckwert verglichen wird, wobei der Mikroprozessor (9) mit einem Signalgeber (10) so gekoppelt ist, daß beim Über- oder Unterschreiten des eingespeicherten Soll-Anpreßdruckwertes des Benutzers ein wahrnehmbares Signal ausgelöst wird.

2. Elektrisch angetriebene Zahnbürste nach Anspruch 1, dadurch gekennzeichnet, daß der Druckaufnehmer (8) am zur Aufnahme des Bürstenschaftes (5) vorgesehenen Achsenlager (7) angebracht ist.

## Claims

1. Electrically operated toothbrush being fitted with a pressure sensor (8) which records the effective pressure acted against it and which is connected to a microprocessor (9), in which the optimal individual pressure range of the user is recorded, which is compared with the effective actual pressure value effective at the brush during cleaning of the teeth, the microprocessor (9) being connected to a signal transmitter (10) in such a way that in case of exceeding or remaining under the recorded optimum pressure range a signal perceptible by the user is released.

2. Electrically operated toothbrush according to claim 1, characterized in that the pressure sensor (8) is mounted at the axle bearing (7) provided for the incorporation of the brush shank (5).

**Revendications**

1. Brosse à dents électrique ayant un enregistreur de pression (8) qui enregistre la pression appliquée effective et qui est raccordé à un micro-processeur (9) dans lequel l'optimale valeur de pression théorique de l'utilisateur est enregistrée ; cette valeur de pression est comparée avec la pression actuelle appliquée à la brosse à dents ; le micro-processeur (9) est couplé à un signaleur (10) de manière qu'un signal perceptible sera déclenché dans le cas où la valeur de pression appliquée théorique de l'utilisateur serait dépassée ou peut rester inférieure.

2. Brosse à dents électrique selon revendication 1, caractérisée par le fait que l'enregistreur de pression (8) est monté au palier (7) destiné à prendre la tige de la brosse à dents (5).

**Fig.1**

Fig. 2